# EUROPEAN PATENT SPECIFICATION

(11) **EP 2 247 881 B1**
(45) Date of publication and mention of the grant of the patent: **15.03.2017**
(21) Application number: 09706374.7
(22) Date of filing: 16.01.2009
(51) Int. Cl.: F16L 3/10, H02G 3/06

(54) **A CLAMP ASSEMBLY FOR SECURING A CABLE TO A STRUCTURAL SUPPORT**
KLEMMENANORDNUNG ZUR BEFESTIGUNG EINES KABELS AN EINER TRAGEKONSTRUKTION
ENSEMBLE BRIDE DE SERRAGE POUR FIXER UN CÂBLE À UN SUPPORT STRUCTUREL

(30) Priority: 01.02.2008 DK 200800150
(43) Date of publication of application: 10.11.2010
(73) Proprietor: Vestas Wind Systems A/S, 8200 Aarhus N (DK)
(72) Inventor: ØLLGAARD, Børge, DK-6700 Esbjerg (DK)
(74) Representative: Inspicos P/S
(86) International application number: PCT/EP2009/050506
(87) International publication number: WO 2009/095322

(56) References cited:
- EP-A- 0 853 197
- WO-A-98/35415
- DE-C- 893 359
- DE-U1- 7 623 346
- DE-U1- 8 713 620
- DE-U1- 9 303 368
- FR-A- 2 225 679
- FR-A- 2 740 920
- JP-A- 11 122 759
- US-A- 5 472 158

## Description

### FIELD OF THE INVENTION

The present invention relates to a clamp assembly for securing a cable, such as a power cable, to a structural support, such as a wind turbine tower construction, a building or the like. The clamp assembly of the present invention is capable of accommodating cables of varying diameter.

### BACKGROUND OF THE INVENTION

When cables, such as power cables, are installed in structures, such as buildings, wind turbine towers, etc., it is often desirable to fix the cable at various positions. This is primarily done in order to carry structural loads of the cable, but also in order to guide the cable. To this end a number of clamps are normally provided. The clamps should be sized and shaped in such a manner that when a cable is arranged in the clamp, the clamp abuts the cable without squeezing or pinching it. Thereby it is ensured that the clamp is actually capable of fixing the cable sufficiently to allow the clamp to carry structural loads, including the weight, of the cable, while it is prevented that the clamp damages the cable.

The cable may have various transversal dimensions, e.g. diameter of the cable, depending on the specific application of the cable, and depending on which kind of cable it is appropriate to apply in the given situation. Accordingly, in order to fulfil the criteria mentioned above, once a given cable has been selected for a given application, a specific clamp having specific dimensions matching the dimensions of the given cable must be used for securing the cable to the structural support. Thus, it is necessary to maintain a stock of a number of different clamps having various dimensions to match the dimensions of each cable which it may be desired to mount. This is a disadvantage because for each clamp it is necessary to provide customized manufacturing tools, and thereby the manufacturing costs per clamp become relatively high. It is therefore desirable to provide a clamp which is capable of accommodating cables of varying transversal dimensions.

DE 196 06 050 discloses an electrical connector with a two-part shielded isolating housing. The two parts of the two-part housing are shaped in such a manner that one can be accommodated inside the other, thereby allowing a transversal distance between the parts to be varied. This allows the two-part housing to be adjusted to accommodate cables of varying diameter.

Similarly, US 7,041,904 discloses a cable clamp device for retaining an electrical cable in relation to a carrier outside the device. Two parts of the cable clamp are movable relative to each other in such a manner that the mutual distance is adjustable. Thereby cables of varying diameter can be accommodated in the cable clamp device.

Another similar device is shown in DE 103 22 004 disclosing a device for attaching a power cable. The device comprises a pair of jaws arranged with an adjustable mutual distance, thereby allowing cables of varying diameter to be accommodated in the device.

Yet another similar device is shown in DE 75 20 611 U disclosing a connector device comprising a two-part clamp. The two parts of the clamp are slidably movable relative to each other in such a manner that their mutual distance is adjustable. Thereby cables of varying diameter can be accommodated in the clamp.

Document FR2225679 also discloses a clamp assembly for securing a cable to a structural support.

All of the clamp devices described above comprise two parts being slidably movable relative to each other, and the sliding movement moves the two parts into a position where a cable or the like is abutted and held in position by the clamp device. Accordingly, during mounting of a cable in one of the clamp devices described above, the two parts are moved towards each other with the cable in between until 'sufficient abutment' is obtained. Thereby the actual transversal dimension of the space accommodating the cable is not well defined, and there is a risk that the two parts are moved too close to each other. This may lead to the clamp device squeezing or pinching the cable, thereby causing damage.

### DESCRIPTION OF THE INVENTION

It is an object of the invention to provide a clamp assembly which is capable of accommodating cables of various diameters, in which the risk of damaging the cable is reduced as compared to similar prior art clamp assemblies.

According to the present invention the above and other objects are fulfilled by providing a clamp assembly according to claim 1.

The clamp assembly is adapted to hold a cable, such as a power cable, and attaching the cable to a structural support. The structural support is a substantially stable construction, and it may advantageously be a tower construction for a wind turbine, a building or any other suitable kind of structural support. The cable clamp of the present invention may advantageously be used for securing power cables to interior wall parts of a tower construction for a wind turbine.

The clamp assembly comprises a first part and a second part which can be joined together with a cable between them, thereby holding the cable.

The first part is provided with a recess which is shaped and sized in such a manner that a cable can be received in the recess. The recess defines a longitudinal direction. When a cable is mounted in the clamp assembly as described above, it will normally extend along the longitudinal direction.

The first part comprises a plurality of assembly portions distributed along the longitudinal direction. In the present context the term 'assembly portion' should be interpreted to be a part of the first part where the first part and the second part can be attached to each other in order to assemble the clamp assembly.

The second part can be attached to the first part at a selected one of the assembly portions. Thereby the assembly portions define a plurality of distinct and well defined mutual positions of the first part and the second part. The first part and the second part are further attached to each other in such a manner that a space is defined between the first part and the second part, and the space is adapted to accommodate a cable.

The assembly portions are further arranged on the first part in such a manner that each assembly portion defines a transversal dimension, i.e. a dimension along a direction being substantially transversal to the longitudinal direction, of the space for accommodating a cable. Thus, simply by selecting a specific assembly portion and attaching the second part to the first part at that assembly portion, a desired transversal dimension of the space between the first part and the second part can be obtained. The possibility of varying the transversal dimension in this manner allows cables of various diameters to be mounted in the clamp assembly. Furthermore, since the positions of the assembly portions are well defined, the transversal dimensions corresponding to the assembly portions are also well defined.

Accordingly, when a given cable of a given diameter is about to be secured to a structural support by means of one or more clamp assemblies, a suitable assembly portion can simply be selected, and it is thereby ensured that a given transversal dimension of the space defined between the first part and the second is obtained. Thereby the risk that the cable is squeezed or pinched, as well as the risk that the cable is not fitted sufficiently tightly in the clamp assembly is considerably reduced.

The assembly portions are arranged at a stepwise varying section of the first part. Each assembly portion is preferably arranged at a separate step of the stepwise varying section. Thereby a distance between neighbouring steps of the stepwise varying section defines a difference in transversal dimension defined by neighbouring assembly portions, and the transversal dimensions are thereby very well defined.

In this case the second part may comprise at least one abutment portion adapted to be arranged in abutment with a step of the stepwise varying section of the first part. The abutment between an abutment portion and a step provides at least two advantages. The abutment may help in carrying loads, in particular arising from the weight of a cable mounted in the clamp assembly. This is because loads will be transferred from the second part to the first part via the abutment, rather than via attachment means, such as screws. This further has the advantage that it is not necessary to dimension the attachment means to be able to carry loads, and the risk that the attachment means break or are distorted due to loads is eliminated or at least considerably reduced. Furthermore, the abutment may temporarily keep the first part and the second part in a desired mutual position while maintenance personnel ensures a more permanent attachment, e.g. in the form of screws or the like. This makes it easier to ensure that the clamp assembly is assembled in a correct manner, and the risk that one of the parts is dropped during mounting of a cable is considerably reduced.

Each of the steps of the stepwise varying section preferably defines a surface which is arranged substantially perpendicularly to the longitudinal direction, and each abutment portion may define a surface which is adapted to be arranged in abutment with the surface of a step. Thus, when the clamp assembly is mounted on a structural support with a cable arranged therein in such a manner that the cable and the longitudinal direction are arranged substantially vertically, the abutting surfaces will be arranged in a substantially horizontal plane. Thereby the surfaces and gravity will ensure that the second part is kept in a desired position relative to the first part until the parts are attached to each other, e.g. by means of screws or the like.

Each assembly portion comprises one or more recesses, and the second part is provided with one or more protruding parts sized and shaped to fit into the recesses of the assembly portions. Such pairs of recesses and protruding parts may be used for guiding the first part and the second part relative to each other, thereby ensuring that the first part and the second part are positioned correctly relative to each other.

The protruding parts may be arranged to carry structural loads. In this case the structural loads are carried in a very well defined manner, and the load distribution in the clamp assembly is well defined.

The clamp assembly may further comprise means for releasably fixing the second part to the first part. This allows a cable to be mounted in the clamp assembly in the following manner. Initially the cable is arranged in the recess of the first part. Then the second part is positioned at an assembly portion corresponding to the diameter of the cable. Then the first part and the second part are attached to each other by means of the releasable fixing means, and with the cable between them. During maintenance or replacement of the cable, the first part and the second part can easily be detached from each other, thereby providing easy access to the cable. The releasable fixing means may advantageously be one or more screws, snap locks, etc.

The clamp assembly may further comprise means for releasably attaching the clamp assembly to a structural support. The attaching means may be or comprise one or more clips or snap locks adapted to engage a part of the structural support.

The attaching means may be arranged on the first part. In this case the first part may advantageously be attached to the structural support prior to mounting the cable in the recess. Once the cable is arranged in the recess, the second part may be attached to the first part as described above.

The first part and/or the second part may be provided with one or more beads protruding into the space defined between the first part and the second part. Such beads may be used for gently pressing against a cable mounted in the clamp assembly, thereby ensuring sufficient abutment between the clamp assembly and the cable without risking that the cable is damaged due to squeezing or pinching. The bead(s) preferably provide a resilient interface to the cable.

According to one embodiment the first part and the second part may both be provided with one or more beads, and the bead(s) of the first part may be arranged at (a) level(s) which is/are shifted along the longitudinal direction as compared to (a) level(s) of the bead(s) of the second part. Thereby opposite parts of the cable are abutted by beads at shifted positions along the longitudinal direction. This helps ensuring that sufficient abutment is obtained while reducing the risk of squeezing the cable.

The invention further relates to a wind turbine comprising a tower construction, a nacelle accommodating at least a drive train, and a set of rotor blades, wherein one or more clamp assemblies according to the invention is/are attached to the tower construction. The clamp assemblies preferably secure one or more cables, such as one or more power cables, to the tower construction, i.e. each clamp assembly preferably secures a part of a cable to the tower construction, each clamp assembly thereby carrying a weight corresponding to a part of the cable arranged between two clamp assemblies securing the same cable. The cable(s) preferably extend between the nacelle and a base part of the tower construction.

### BRIEF DESCRIPTION OF THE DRAWINGS

The invention will now be described in further detail with reference to the accompanying drawings in which
Fig. 1a is a perspective view of a clamp assembly according to an embodiment of the invention,
Fig. 1b is a detail of Fig. 1a,
Fig. 2 is a perspective view of a first part of the clamp assembly of Fig. 1, and
Fig. 3 is a perspective view of a second part of the clamp assembly of Fig. 1.

### DETAILED DESCRIPTION OF THE DRAWINGS

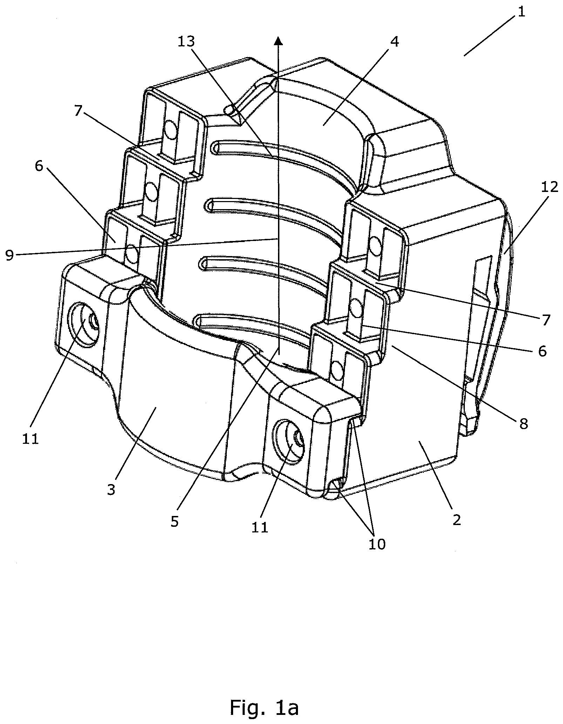

Fig. 1a is a perspective view of a clamp assembly 1 according to an embodiment of the invention. The clamp assembly 1 comprises a first part 2 and a second part 3 being releasably attached to the first part 2. The first part 2 is provided with a recess 4 adapted to receive a cable, and the recess 4 and the second part 3 in combination form a space 5 in which the cable can be accommodated. The first part 2 is further provided with four assembly portions 6, each assembly portion 6 being arranged at a step 7 of a stepwise varying section 8 of the first part 2. The first part 2 defines a longitudinal direction, indicated by arrow 9. When a cable is arranged in the space 5 a longitudinal axis of the cable will normally be arranged along the longitudinal direction 9.

The steps 7 of the stepwise varying section 8 each defines a step surface which is arranged substantially perpendicularly to the longitudinal direction.

The stepwise varying section 8 of the first part 2 has the consequence that the dimension of the space 5 along a direction which is transversal to the longitudinal direction 9 varies depending on which assembly portion 6 the second part 3 is attached at. In Fig. 1a the second part 3 is attached to the first part 2 at the lowermost assembly portion 6. Thereby the resulting space 5 has the largest possible dimension along the transversal direction, and a cable having a diameter corresponding to this dimension can be accommodated in the space 5. By positioning the second part 3 at one of the other assembly portions 6, the space 5 will be dimensioned to accommodate cables having another, smaller, diameter, i.e. each assembly portion 6 corresponds to a specific cable diameter. Thus, the clamp assembly 1 is capable of accommodating cables of various diameters, thereby allowing the same type of clamp assembly 1 to be used for securing a variety of different cables and in a variety of different applications. It is therefore not necessary to maintain a stock of various clamp assemblies, each corresponding to a specific cable diameter, and the same manufacturing tools can be used for producing all the required clamp assemblies 1, and thereby the manufacturing process is made less complicated and more cost effective.

The second part 3 is provided with abutment portions 10 which are arranged in abutment with the steps 7 of the first part 2 when the second part 3 is attached to the first part 2. When the first part 2 and the second part 3 are assembled in this manner, the steps 7 and the abutment portions 10 abut along a plane arranged substantially perpendicularly to the longitudinal direction 9. This plane will often be arranged substantially horizontally when the clamp assembly 1 is mounted on a structural support with a cable arranged in the space 5 along the longitudinal direction 9. Thereby the second part 3 rests on the first part 2 in a manner which helps distributing loads, due to gravity. Furthermore, the second part 3 is kept in position while a more permanent attachment is provided, e.g. by fastening screws 11. This is in particular advantageous when the clamp assembly 1 is arranged relatively high above the ground. This is, e.g., the case when the clamp assembly 1 is used for securing a cable to a tower construction of a wind turbine.

The first part 2 is provided with an attachment portion 12 in the form of a clip which can be fitted onto a suitable part arranged on the structural support onto which a cable is to be secured by means of the clamp assembly 1. The attachment portion 12 makes it possible to easily attach the clamp assembly 1 at a desired position of the structural support.

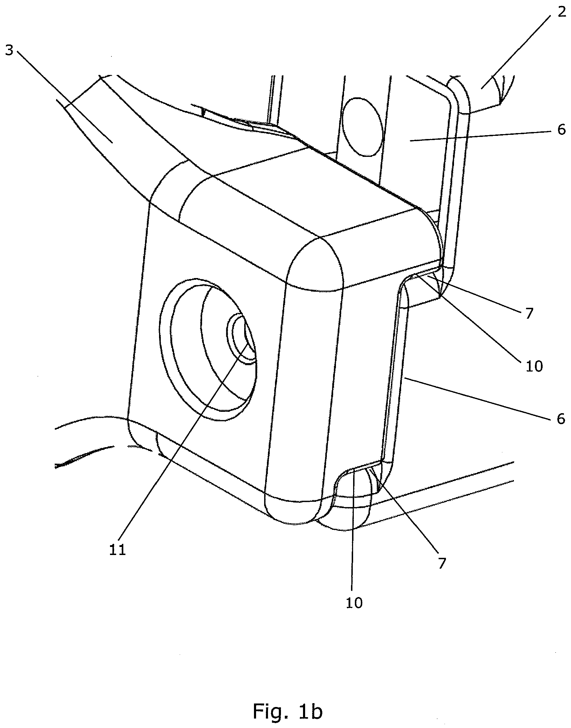

Four beads 13 are arranged in the recess 4. When a cable is mounted in the clamp assembly 1 the beads 13 are arranged in abutment with the cable. As described above, this reduces the risk of causing damage to the cable due to squeezing or pinching. The second part 3 is also provided with similar beads (not visible in Fig. 1). These are preferably arranged in such a manner that when the first part 2 and the second part 3 are assembled as shown in Fig. 1, the beads 13 of the first part 2 and the beads of the second part 3 are arranged at shifted levels along the longitudinal direction 9. This even further reduces the risk of pinching the cable.

Fig. 1b is a detail of Fig. 1a showing the part where the second part 3 is attached to the first part 2. In Fig. 1b it can clearly be seen how the abutment portions 10 of the second part 3 abut the steps 7 of the first part 2. As described above, this allows loads to be transferred from the second part 3 to the first part 2, via the abutment, rather than via screws used for attaching the second part 3 to the first part 2.

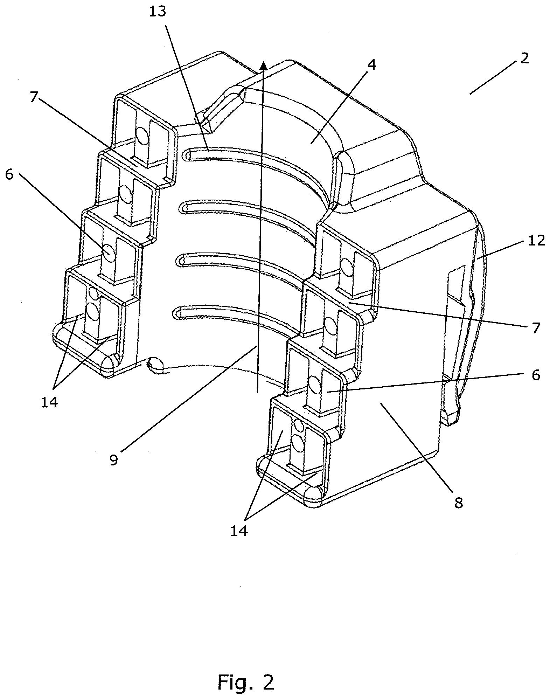

Fig. 2 is a perspective view of a first part 2 of the clamp assembly 1 of Fig. 1. The elements described above are clearly visible and have been provided with identical reference numerals.

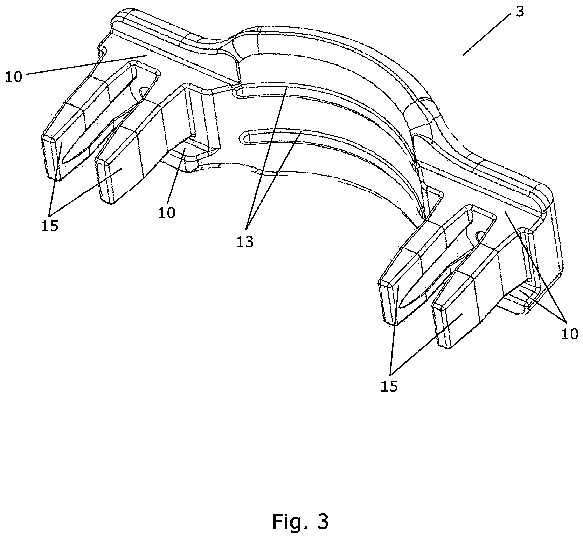

Each assembly portion 6 is provided with two recesses 14 which are adapted to receive corresponding protruding parts arranged on the second part. This will be described further below with reference to Fig. 3.

Fig. 3 is a perspective view of a second part 3 of the clamp assembly 1 of Fig. 1. In Fig. 3 two beads 13 arranged on the second part 3 can be seen.

The second part 3 is provided with four protruding parts 15. These are shaped and sized to fit into recesses 14 formed on the assembly portions 6 of the first part 2. Thus, when the first part 2 and the second part 3 are assembled to form the clamp assembly 1 the protruding parts 15 are accommodated in the recesses 14. Thereby the protruding parts 15 will carry part of the loads applied to the clamp assembly 1, in particular loads arising from the weight of the cable. Accordingly, the load distribution of the clamp assembly 1 is improved. Furthermore, during assembly of the clamp assembly 1 the recesses 14 and the protruding parts 15 in combination guide the first part 2 and the second part 3 relative to each other. Thereby it is ensured that a desired mutual position of the first part 2 and the second part 3 is precisely obtained.

## Claims

1. A clamp assembly (1) for securing a cable to a structural support, the clamp assembly (1) comprising:
- a first part (2) adapted to receive a cable in a recess (4), said recess (4) defining a longitudinal direction (9) of the first part (2), the first part (2) being provided with a plurality of assembly portions (6) distributed along the longitudinal direction (9), and
- a second part (3) adapted to be attached to the first part (2) at a selected one of the assembly portions (6) in such a manner that a space (5) is defined between the first part (2) and the second part (3), said space (5) being adapted to accommodate a cable,
wherein the assembly portions (6) are arranged in a stepwise manner on the first part (2) such that a dimension of the space (5) defined between the first part (2) and the second part (3) along at least one direction being substantially transversal to the longitudinal direction (9) is variable by attaching the second part (3) at a selected step of the assembly portions (6), wherein each assembly portion (6) further comprises one or more recesses (14) formed therein, and wherein the second part (3) is provided with one or more protruding parts (15) sized and shaped to fit into the recesses (14) of the assembly portions (6).

2. A clamp assembly (1) according to claim 1, wherein the stepped assembly portions (6) define surface portions arranged substantially perpendicular to the longitudinal direction, and wherein the second part has at least one abutment portion for abutting a said surface portion.

3. A clamp assembly (1) according to claim 2, wherein the second part (3) comprises abutment portions (10) for abutting respective surface portions on adjacent steps of the first part (2).

4. A clamp assembly (1) according to any of the preceding claims, wherein the protruding parts (15) are arranged to carry structural loads.

5. A clamp assembly (1) according to any of the preceding claims, further comprising means (11) for releasably fixing the second part (3) to the first part (2).

6. A clamp assembly (1) according to any of the preceding claims, further comprising means (12) for releasably attaching the clamp assembly (1) to a structural support.

7. A clamp assembly (1) according to claim 6, wherein the attaching means (12) is arranged on the first part (2).

8. A clamp assembly (1) according to claim 6 or 7 wherein the attaching means is a clip.

9. A clamp assembly (1) according to any of the preceding claims, wherein the first part (2) and/or the second part (3) is/are provided with one or more beads (13) protruding into the space (5) defined between the first part (2) and the second part (3).

10. A clamp assembly (1) according to claim 9, wherein the first part (2) and the second part (3) are both provided with one or more beads (13), and wherein the bead(s) (13) of the first part (2) is/are arranged at (a) level(s) which is/are shifted along the longitudinal direction (9) as compared to (a) level(s) of the bead(s) (13) of the second part (3).

11. A wind turbine comprising a tower construction, a nacelle accommodating at least a drive train, and a set of rotor blades, wherein one or more clamp assemblies (1) according to any of the preceding claims is/are attached to the tower construction.

12. A wind turbine according to claim 11, wherein each clamp assembly (1) secures a part of a cable to the tower construction.

## Patentansprüche

1. Klemmenbaugruppe (1) zum Befestigen eines Kabels an einer strukturellen Stütze, die Klemmenbaugruppe (1) umfassend:
- ein erstes Teil (2), das zum Aufnehmen eines Kabels in einer Aussparung (4) geeignet ist, wobei die Aussparung (4) eine Längsrichtung (9) des ersten Teils (2) definiert, wobei das erste Teil (2) mit mehreren Baugruppenabschnitten (6) versehen ist, die entlang der Längsrichtung (9) verteilt sind, und
- ein zweites Teil (3), das dazu geeignet ist, derart am ersten Teil (2) an einem ausgewählten der mehreren Baugruppenabschnitte (6) angebracht zu sein, dass ein Raum (5) zwischen dem ersten Teil (2) und dem zweiten Teil (3) definiert ist,
wobei der Raum (5) zum Unterbringen eines Kabels geeignet ist,
wobei die Baugruppenabschnitte (6) stufenweise am ersten Teil (2) angeordnet sind, sodass eine Abmessung des Raums (5), der zwischen dem ersten Teil (2) und dem zweiten Teil (3) definiert ist, entlang zumindest einer Richtung, die im Wesentlichen quer zur Längsrichtung (9) verläuft, durch Anbringen des zweiten Teils (3) an einer ausgewählten Stufe der Baugruppenabschnitte (6) variabel ist, wobei jeder Baugruppenabschnitt (6) ferner eine oder mehr darin ausgebildete Aussparungen (14) umfasst, und wobei das zweite Teil (3) mit einem oder mehr vorstehenden Teilen (15) versehen ist, die zum Passen in die Aussparungen (14) der Baugruppenabschnitte (6) bemessen und geformt sind.

2. Klemmenbaugruppe (1) nach Anspruch 1, wobei die abgestuften Baugruppenabschnitte (6) Oberflächenabschnitte definieren, die im Wesentlichen senkrecht zur Längsrichtung angeordnet sind, und wobei das zweite Teil zumindest einen Angrenzabschnitt zum Angrenzen an einen derartigen Oberflächenabschnitt aufweist.

3. Klemmenbaugruppe (1) nach Anspruch 2, wobei das zweite Teil (3) Angrenzabschnitte (10) zum Angrenzen an jeweilige Oberflächenabschnitte an benachbarten Stufen des ersten Teils (2) umfasst.

4. Klemmenbaugruppe (1) nach einem der vorhergehenden Ansprüche, wobei die vorstehenden Teile (15) zum Tragen von strukturellen Lasten angeordnet sind.

5. Klemmenbaugruppe (1) nach einem der vorhergehenden Ansprüche, ferner umfassend Mittel (11) zum lösbaren Befestigen des zweiten Teils (3) am ersten Teil (2).

6. Klemmenbaugruppe (1) nach einem der vorhergehenden Ansprüche, ferner umfassend Mittel (12) zum lösbaren Anbringen der Klemmenbaugruppe (1) an einer strukturellen Stütze.

7. Klemmenbaugruppe (1) nach Anspruch 6, wobei das Anbringungsmittel (12) am ersten Teil (2) angeordnet ist.

8. Klemmenbaugruppe (1) nach einem der Ansprüche 6 oder 7, wobei das Anbringungsmittel ein Clip ist.

9. Klemmenbaugruppe (1) nach einem der vorhergehenden Ansprüche, wobei das erste Teil (2) und/oder das zweite Teil (3) mit einer oder mehr Wülsten (13) versehen ist/sind, die in den Raum (5) vorstehen, der zwischen dem ersten Teil (2) und dem zweiten Teil (3) definiert ist.

10. Klemmenbaugruppe (1) nach Anspruch 9, wobei das erste Teil (2) und das zweite Teil (3) beide mit einer oder mehr Wülsten (13) versehen ist/sind, und wobei die Wulst (Wülste) (13) des ersten Teils (2) auf einer Höhe (Höhen) angeordnet ist/sind, die im Vergleich zu einer Höhe (Höhen) der Wulst (Wülste) (13) des zweiten Teils (3) entlang der Längsrichtung (9) versetzt ist/sind.

11. Windturbine, umfassend einen Turmbau, eine Zelle, die zumindest einen Antriebsstrang unterbringt, und einen Satz Rotorblätter, wobei eine oder mehr Klemmenbaugruppen (1) gemäß einem der vorhergehenden Ansprüche am Turmbau angebracht ist/sind.

12. Windturbine nach Anspruch 11, wobei jede Klemmenbaugruppe (1) einen Teil eines Kabels am Turmbau befestigt.

## Revendications

1. Ensemble bride de serrage (1) pour fixer un câble à un support structurel, l'ensemble bride de serrage (1) comprenant :
- une première partie (2) adaptée pour recevoir un câble dans un évidement (4), ledit évidement (4) définissant une direction longitudinale (9) de la première partie (2), la première partie (2) étant dotée d'une pluralité de portions d'ensemble (6) distribuées le long de la direction longitudinale (9), et
- une deuxième partie (3) adaptée pour être attachée à la première partie (2) à une sélectionnée parmi les portions d'ensemble (6) de telle manière qu'un espace (5) est défini entre la première partie (2) et la deuxième partie (3), ledit espace (5) étant adapté pour loger un câble,
dans lequel les portions d'ensemble (6) sont agencées de manière étagée sur la première partie (2) de telle sorte qu'une dimension de l'espace (5) défini entre la première partie (2) et la deuxième partie (3) le long d'au moins une direction sensiblement transversale à la direction longitudinale (9) est variable par attachement de la deuxième partie (3) à un étage sélectionné des portions d'ensemble (6), dans lequel chaque portion d'ensemble (6) comprend en outre un ou plusieurs évidements (14) formés à l'intérieur de celle-ci, et dans lequel la deuxième partie (3) est dotée d'une ou plusieurs parties en saillie (15) dimensionnées et formées pour s'ajuster dans les évidements (14) des portions d'ensemble (6).

2. Ensemble bride de serrage (1) selon la revendication 1, dans lequel les portions d'ensemble étagées (6) définissent des portions de surface agencées de manière sensiblement perpendiculaires à la direction longitudinale, et dans lequel la deuxième partie a au moins une portion de butée pour buter contre une dite portion de surface.

3. Ensemble bride de serrage (1) selon la revendication 2, dans lequel la deuxième partie (3) comprend des portions de butée (10) pour buter contre des portions de surface respectives sur des étages adjacents de la première partie (2).

4. Ensemble bride de serrage (1) selon l'une quelconque des revendications précédentes, dans lequel les parties en saillie (15) sont agencées pour porter des charges structurelles.

5. Ensemble bride de serrage (1) selon l'une quelconque des revendications précédentes, comprenant en outre des moyens (11) pour la fixation amovible de la deuxième partie (3) à la première partie (2).

6. Ensemble bride de serrage (1) selon l'une quelconque des revendications précédentes, comprenant en outre des moyens (12) pour l'attachement amovible de l'ensemble bride de serrage (1) à un support structurel.

7. Ensemble bride de serrage (1) selon la revendication 6, dans lequel le moyen d'attachement (12) est agencé sur la première partie (2).

8. Ensemble bride de serrage (1) selon la revendication 6 ou 7 dans lequel le moyen d'attachement est une pince.

9. Ensemble bride de serrage (1) selon l'une quelconque des revendications précédentes, dans lequel la première partie (2) et/ou la deuxième partie (3) est/sont dotée(s) d'un ou plusieurs bourrelets (13) en saillie dans l'espace (5) défini entre la première partie (2) et la deuxième partie (3).

10. Ensemble bride de serrage (1) selon la revendication 9, dans lequel la première partie (2) et la deuxième partie (3) sont toutes deux dotées d'un ou plusieurs bourrelets (13), et dans lequel le(s) bourrelet(s) (13) de la première partie (2) est/sont agencé(s) à un(des) niveau(x) qui est/sont déplacé(s) le long de la direction longitudinale (9) par rapport à un(des) niveau(x) du(des) bourrelet(s) (13) de la deuxième partie (3).

11. Éolienne comprenant une construction de tour, une nacelle logeant au moins un train d'entraînement, et un ensemble de pales de rotor, dans laquelle un ou plusieurs ensembles bride de serrage (1) selon l'une quelconque des revendications précédentes est/sont attaché(s) à la construction de tour.

12. Éolienne selon la revendication 11, dans laquelle chaque ensemble bride de serrage (1) fixe une partie d'un câble de la construction de tour.
